# EUROPEAN PATENT APPLICATION

(11) **EP 4 571 273 A1**
(43) Date of publication of application: **18.06.2025**
(21) Application number: 23216210.7
(22) Date of filing: 13.12.2023
(51) Int. Cl.: G01F 1/05, G01F 1/075

(54) **ELECTROMAGNETIC STIRRING AND MEASURING SYSTEM FOR CHEMICAL ANALYSIS SYSTEM**

(71) Applicant: ABB SCHWEIZ AG, 5400 Baden (CH)
(72) Inventor: DOE, William, Bristol, BS3 5BJ (GB); REDFERN, Adam, Gloucester, GL2 8NE (GB)
(74) Representative: Maiwald GmbH

(57) **Abstract**

The invention relates to a flow measurement system (100) for a chemical analysis system, which comprises a measuring cell (10) comprising an inlet (180), a magnetic stirring bar (110) and an inductor arrangement (120) comprising at least one inductor (125). The measuring cell (10) may be configured for allowing a fluid flowing into the measuring cell (10) at a flow rate. The at least one inductor (125) of the inductor arrangement (120) is configured to detect a measuring signal induced at the at least one inductor (125) by the movement of the magnetic stirring bar (110) and indicative of a presence of the flow of the fluid and/or the flow rate of the fluid. The at least one inductor (125) of the inductor arrangement (120) may also be configured to generate a movement of the magnetic stirring bar (110) to agitate the fluid in the measurement cell (10).

## Description

### FIELD OF INVENTION

The present disclosure relates to a flow measurement system for a chemical analysis system, a chemical analysis system for determining a flow rate of a fluid in a measuring cell, the use of a flow measurement system in a chemical analysis system and a method for operating a flow measurement system for a chemical analysis system.

### BACKGROUND

Automatic chemical analysis systems often utilize an electromagnetic stirring system to agitate a fluid or mix a number of liquids via a magnetic stir bar. Typically, chemical analysis systems requiring the sample flow measurements may employ a dedicated flow meter, such as a turbine flow meter or a thermal flow meter on the sample inlet of the device. These flow meters may be costly and have significant size and form factors which make integrating them into a measurement system more difficult.

### SUMMARY

It may be seen as an objective of the invention to provide an improved flow detecting system which may allow to efficiently quantify the flow state inside a measuring volume.

The objective is achieved by the subject matter of the independent claims. The dependent claims, the following description and the drawings show embodiments of the invention.

According to a first aspect of the present disclosure, a flow measurement system is provided for a chemical analysis system that comprises a measuring cell, a magnetic stirring bar and an inductor arrangement. The measuring cell comprises an inlet, which is configured for allowing a fluid flowing into the measuring cell at a flow rate. The magnetic stirring bar is arrangeable in the measuring cell and configured to be driven into a movement by the fluid flowing into the measuring cell. The inductor arrangement comprises at least one inductor. The at least one inductor of the inductor arrangement is configured to detect a measuring signal induced at the at least one inductor by the movement of the magnetic stirring bar and indicative of a presence of the flow of the fluid and/or the flow rate of the fluid.

For example, the magnetic stirring bar may comprise, but not limited to comprise, a cylindrical shape or an oval shape, or a bearing neck. The magnetic stirring bar may comprise a different shape which may fit the shape of the bottom of the measuring cell.

In the chemical analysis measurement, a pressure to drive the liquid into the measuring cell may vary significantly. If may thus be of great importance that the flow rate of the fluid may be quantified when the fluid flowing through the system, for example during the flushing of the measuring cell. For example, if the measuring cell may be allowed to flush with the fluid for a fixed period of time, it may be desired to select the period such that the measuring cell may be adequately flushed if the minimum flow rate and/or the minimum pressure may be met.

By using the inductor arrangement having multiple inductors for detect the flow rate of the fluid flowing through or into the measuring cell, the flow measurement system may advantageously minimize excess fluid consumption during the chemical analysis measurement or in preparation for the chemical analysis measurement. Further, the flow measurement system of the present disclosure may determine the flow rate and subsequently determine the sufficient amount of the liquid to be delivered for the chemical measurement in an efficient way, so that the amount of the fluid wasted due to excessive flushing may be reduced or minimized. As such, the amount of the liquid consumption of the chemical analysis system in installations may be reduced by controlling the fluid pressure above the minimum requirement.

The flow measurement system of the present disclosure may advantageously utilize the pre-existing inductor arrangement for agitating, mixing or stirring the fluid to enable the in-situ and/or real-time flow rate measurement, without placing an additional flow sensor or significantly modifying the construction of the chemical analysis system or of the measuring cell.

According to an embodiment, the measuring signal may be a voltage signal induced by the movement of the magnetic stirring bar at the at least one inductor.

According to another embodiment, the measuring signal induced by the movement of the magnetic stirring bar may be proportional to the flow rate of the fluid.

The flow measurement system may advantageously utilize the existing electromagnetic stirring system, which may comprise the magnetic stirring bar and the inductor arrangement having the at least one inductor, to measure the motion or speed of rotation of the magnetic stirring bar inside the measuring cell.

When the stirring bar may rotate or spin, the motion of the rotation may be detected, and an electronic output proportional to the flow may be generated. This could be, but is not limited to, an analogue voltage/current whose value may be proportional to the flow rate, a PWM (pulse width modulated) signal whose duty cycle may be proportional to the flow rate, a uniform alternating switched signal whose frequency may be proportional to the flow rate, or a train of pulses whose quantity in a given time period may be proportional to the flow rate.

According to another embodiment, the at least one inductor may comprise a plurality of inductors, which may be arranged axially around the axis of rotation of the magnetic stirring bar.

By sensing the induced voltage in the one or the plurality of inductors, the fluid flow rate may be obtained and assessed. The detecting mode or the sensing mode may be connected to one or a plurality of inductors. For example, the detecting mode may be performed by a single inductor. However, by connecting to multiple inductors, a greater sensitivity of a sensing circuit connected to the inductors may be achieved.

The flow measurement system comprise a common, dual-use circuit for controlling the driving mode and the detecting mode, which may be easily modified from a pre-existing circuit of a magnetic stirring system.

According to another embodiment, the at least one inductor may be configured to generate a magnetic field for inducing a first motion of rotation of the magnetic stirring bar that may have an inertia of rotation, in order to agitate, stir or mix the fluid or content inside the measuring cell.

According to another embodiment, the plurality of inductors may be configured to be energized in a predefined order and/or at a predefined frequency for generating the magnetic field for inducing the first motion of rotation of the magnetic stirring bar.

Since the inductor arrangement having the multiple inductors may be designed as the inductive sensing unit for the flow measurement system, there may be no dedicated or separate detectors arranged in the pre-existing stirring system. This may advantages lead to a compact construction of the flow measurement system. Further, the pre-existing system may be easily and efficiently modified to be the flow measurement system of the present disclosure.

According to another embodiment, the flow measurement system may further comprise a control module, which may be configured to activate a driving mode or a detecting mode for the at least one inductor of the inductor arrangement. The driving mode may be configured to activate the at least one inductor to generate the magnetic field for inducing the first motion of rotation of the magnetic stirring bar. The detecting mode may be configured to activate the at least one inductor to detect the measuring signal for determining the movement of the magnetic stirring bar as a result of the presence of the flow of the fluid and/or the flow rate of the fluid.

According to another embodiment, the movement of the magnetic stirring bar may be a second motion of rotation driven by the fluid flowing into the measuring cell from the inlet.

The fluid may be a liquid to be detected by means of the measuring cell. The liquid to be detected may be a sample liquid, a reagent liquid and/or a mixture liquid of the sample liquid and the reagent liquid. The fluid may be, but not limited to, a pressurized fluid from a pipe or tank, a bottle of fluid at atmospheric pressure.

According to another embodiment, the control module may be configured to switch off the driving mode for enabling the measuring signal to be detected.

Further, the control module may be configured to switch on or off the driving mode, or to switch on or off the detecting mode.

According to another embodiment, the control module may further comprise a switch element, which may be configured to switch between the driving mode and the detecting mode.

With the integrated driving mode and detecting mode in the control module, the flow measurement system may significantly reduce the cost of the flow measurement in the chemical analysis system, since only a small addition of the detecting mode may be arranged, for example in a circuit board. This may further free up space with the chemical analysis system as footprint or space for a dedicated flow meter may not be required. As such, the flow measurement system may comprise a compact construction with the optimized design of the circuit board, on which the driving mode and the detecting mode may be mounted close to each other.

In the electromagnetic stirring and measuring system, the inductor arrangement may allow the detection of fluid flow even at a very low flow rate. The flow measurement system of the present disclosure may allow a dual-use or a re-use of the inductor arrangement, in particular the at least one inductor, with integrated fluid driving mode and flow detecting mode.

According to a second aspect of the present disclosure, a chemical analysis system is provided for determining a flow rate of a fluid in a measuring cell. The chemical analysis system comprises a flow measurement system of the present disclosure, which is configured to measure a flow rate of a magnetic stirring bar for agitating a fluid in the measuring cell, and a detecting arrangement, which is configured to detect the fluid in the measuring cell.

The detecting arrangement may be configured to perform, for example but not limited to, an optical measurement, an electrical measurement or an electrochemical measurement to detect and analyze the fluid sample in the measuring cell.

According to an embodiment, the detecting arrangement may be, but not be limited to be, arrangeable in a top reagion of the measuring cell or laterally to the measuring cell.

For example, the detecting arrangement may be placed into the top of the measuring cell if the measurement may be performed, for example, for a pH or chlorine sample. Alternatively, the detecting arrangement may be arranged laterally at a predefined distance to the side wall of the measuring cell or at a side wall of the measuring cell. Alternatively or additionally, the detecting arrangement may be arranged in or around the measuring cell for the optical, electrical or electrochemical measurement.

According to a third aspect of the present disclosure, the use of a flow measurement system of the present disclosure is provided in a chemical analysis system of the present disclosure.

According to a fourth aspect of the present disclosure, a method is provided for operating a flow measurement system for a chemical analysis system. The method comprises the following steps:
- arranging a magnetic stirring bar in a measuring cell;
- allowing a fluid flowing into the measuring cell via an inlet and driving the magnetic stirring bar into a movement at a flow rate;
- detecting a measuring signal induced at the at least one inductor by the movement of the magnetic stirring bar by switching on a detecting mode of a control module;
- determining, based on the detected measuring signal, a presence of a flow of the fluid and/or the flow rate of the fluid.

Optionally, the step of the switching to the detecting mode or the sensing mode of the control module for detecting the measuring signal may comprise the step of deactivating the driving mode before activating the detecting mode of the control module, for example, by means of a switch element.

For example, it may be provided that the detecting mode or the sending mode, by means of a sensing circuit, may continuously be switched on. When the driving mode may be switched on, the measuring signal may be disregarded by the control module. Alternatively, the driving mode and the detecting mode may not be activated concurrently.

According to an embodiment, the method may further comprise a step, in which a volume of the fluid which may be allowed to flow through or into the measuring cell may be adjusted based on the flow rate determined by the flow measurement system.

For example, the volume of the fluid alloed to enter into the measuring cell may be controlled or enabled or prevented based upon the flow rate feedback from the flow measurement system.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

There may be provided a computer program that comprises machine-readable instructions that, when executed by one or more computers and/or compute instances, cause the one or more computers and/or compute instances to perform a method for operating a flow measurement system for a chemical analysis system.

There may be provided a non-transitory machine-readable data carrier and/or a download product with the computer program. A download product is an instance of the computer program that may be sold and downloaded online for immediate fulfilment in lieu of physically shipping a machine-readable data carrier.

There may be provided one or more computers and/or compute instances with the computer program comprising machine-readable instructions that, when executed by one or more computers and/or compute instances, cause the one or more computers and/or compute instances to perform a method for operating a flow measurement system for a chemical analysis system, and/or with the machine-readable data carrier and/or download product with the computer program.

It should be noted that the above examples may be combined with each other irrespective of the aspect involved. Accordingly, the method may be combined with structural features and, likewise, the apparatus and the system may be combined with features described above with regard to the method.

These and other aspects will be apparent from and elucidated with reference to the embodiments as per the drawings described hereinafter.

### BRIEF DESCRIPTION OF THE FIGURES

Examples of the disclosure will be described in the following with reference to the following drawings.
- Fig. 1: shows schematically a side view of an example of a flow measurement system according to the present disclosure;
- Fig. 2: shows schematically a top view of an example of a flow measurement system according to the present disclosure;
- Fig. 3: shows schematically an electronic construction of a flow measurement system according to the present disclosure;
- Fig. 4: shows schematically a flow chart illustrating a method for operating a flow measurement system for a chemical analysis system according to the present disclosure.

The figures are merely schematic representations and serve only to illustrate examples of the disclosure. Identical or equivalent elements are in principle provided with the same reference signs.

### DETAILED DESCRIPTION OF EMBODIMENTS

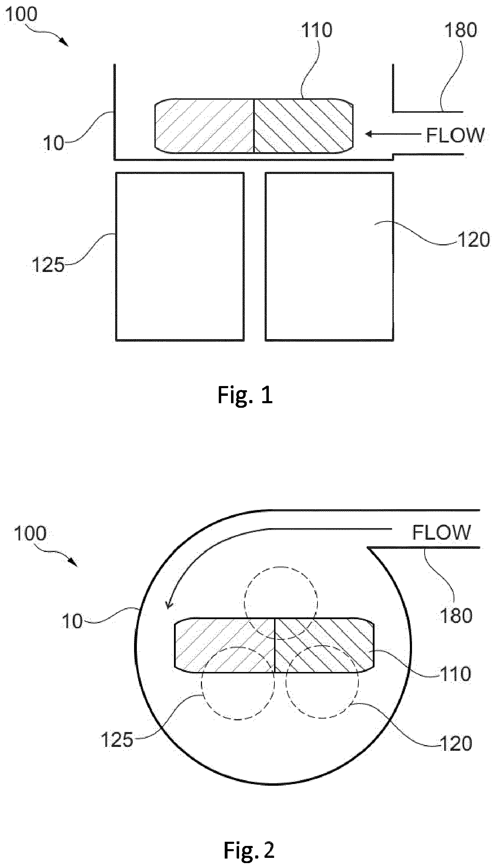

Fig. 1 and Fig. 2 show, respectively and schematically, a side view and a top view of a flow measurement system 100 for a chemical analysis system. The chemical analysis system comprises a measuring cell 10 or a measuring cuvette.

The flow measurement system 100 comprises a measuring cell 10 that comprises an inlet 180, a magnetic stirring bar 110 and an inductor arrangement 120 that comprises at least one inductor 125, here for example two inductors 125.

The measuring cell 10 may be a measuring cuvette or a flow cell having a rectangular or cylindrical shape. The measuring cell 10 may be configured to be filled with a fluid or liquid to be optically, chemically or electrically detected by a detecting arrangement that may be, but not limited to be, arranged in a top region of the measuring cell 10 or laterally to measuring cell 10 or at the side wall of the measuring cell 10. The fluid or liquid may be a sample liquid, a reagent liquid and/or a mixture liquid of the sample liquid and the reagent liquid. The fluid may be, but not limited to, a pressurized fluid from a pipe or tank, a bottle of a liquid at atmospheric pressure.

The inlet 180 may be configured to allow the fluid flowing into the measuring cell 10 at a flow rate. The inlet 180 may be arranged in a bottom or lower region of the measuring cell 10.

The magnetic stirring bar 110 is arranged in the measuring cell 10, for example, in the bottom or lower region of the measuring cell 10. For example, the magnetic stirring bar 110 may be arranged at a same height as the inlet 180 inside the measuring cell 10, so that the fluid may enter tangentially to a cylindrical part of the measuring cell 10 to provide a suitable movement or rotation of the magnetic stirring bar 110. As such, the magnetic stirring bar 110 may be configured to be driven into the movement or rotation by the fluid flowing into the measuring cell 10.

The magnetic stirring bar 110 may comprise a substantially cylindrical shape, as shown in Fig. 1 and Fig. 2. However, the magnetic stirring bar 110 may comprise a different shape, for example but not limited to an oval shape. Alternatively, the magnetic stirring bar 110 may comprise a bearing neck.

The inductor arrangement 120 may be arranged outside and below the measuring cell 10 and the magnetic stirring bar 110. The at least one inductor 125 of the inductor arrangement 120 may comprise a plurality of inductors 125. In the side view shown in Fig. 1, two inductors 125 are arranged. Fig. 2 shows that, alternatively, three inductors 125 or more inductors may be arranged in the inductor arrangement 120.

The plurality of inductors 125 may be arranged axially around the axis of rotation of the magnetic stirring bar. For example, the two inductors in Fig. 1 may be arranged symmetrically about the axis of the rotation of the magnetic stirring bar 110. By contrast, the three inductors in Fig. 2 may be arranged or distributed around the axis of the rotation of the magnetic stirring bar 110. The axis of the rotation of the magnetic stirring bar 110 may be in parallel to or overlap with the centerline of the measuring cell 10.

The inductor arrangement 120 may be arranged below the measuring cell 10, so that the at least one inductor 125 may be configured to couple with the magnetic stirring bar 110 inside the measuring cell 10 and to generate a magnetic field for inducing a motion of rotation of the magnetic stirring bar 110 which may then have an inertia of rotation. Further, the at least one inductor 125 may be configured to detect the movement of the magnetic stirring bar 110 by receiving the measuring signal induced by the driven movement of the magnetic stirring bar 110.

The at least one inductor 125 may be configured to detect a measuring signal due to the movement of the magnetic stirring bar and indicative of a presence of the flow of the fluid and/or the flow rate of the fluid. The measuring signal may be a voltage signal induced by the movement of the magnetic stirring bar at the at least one inductor.

Further, the measuring signal induced by the movement of the magnetic stirring bar 110 may be proportional to the flow rate of the fluid.

Additionally, the at least one inductor 125 may be configured to generate a magnetic field for inducing a first motion of rotation of the magnetic stirring bar 110 having an inertia of rotation. The plurality of inductors 125 may be configured to be energized or powered sequentially in a predefined order at a predefined frequency for generating a magnetic field for inducing the first motion of rotation of the magnetic stirring bar 110.

Accordingly, the inductor arrangement 120 may be in a driving mode for actively driving the inductors 125 generating the alternating or rotating magnetic field for inducing the first motion of rotation of the magnetic stirring bar 110.

The fluid may enter or flow into the measuring cell 10 tangentially to a cylindrical part of the measuring cell 10 to provide a suitable rotation of the magnetic stirring bar. The movement of the magnetic stirring bar 110 may be a second motion of rotation driven by the fluid flowing into the measuring cell 10 from the inlet 180. For example, the second motion of rotation of the magnetic stirring bar may comprise a different rotation velocity than the first motion of rotation.

The control module 160 comprises a driving mode 161 and a detecting mode 162. The driving mode 161 may be electronically connected to the at least one inductor 125 and configured to activate the at least one inductor 125 to generate the magnetic field for inducing a first motion of rotation of the magnetic stirring bar. The detecting mode 162 may be electronically connected to the at least one inductor 125 and configured to activate the at least one inductor 125 to detect the measuring signal for determining the movement of the magnetic stirring bar 110 and the presence of the flow of the fluid and/or the flow rate of the fluid, for example, when the driving mode 161 is turned off or deactivated. The control module 160 may be configured to switch off or deactivate the driving mode 161 before switching off the detecting mode 162.

The movement of the magnetic stirring bar 110 may be a second motion of rotation driving by the fluid flowing into the measuring cell 10 from the inlet 180.

The control module 160 may further comprise a switch element 165, which may be configured to switch between the driving mode 161 and the detecting mode 162. In other words, the control module 160 may be configured to activate the driving mode 161 to allow the at least one inductor 125 generating the magnetic field for inducing the first motion of rotation of the magnetic stirring bar 110. Subsequently, when the flow measurement is to be performed, the control module 160 may be configured to turn off or deactivate the driving mode 161 and activate the detecting mode 161 to allow the at least one inductor 125 detecting a measuring signal induced by the movement or the second motion of rotation of the stirring bar 110, and/or the presence of the fluid flow inside the measuring cell 10 and/or the flow rate of the fluid flowing into the measuring cell 10 via the inlet 180.

For example, the magnetic stirring bar 110 is determined to be present if the measuring signal induced by the motion of rotation of the magnetic stirring bar 110 due to an inertia of rotation may be detected. By constrast, if the induced measuring signal is not detected or below a predefined limit, the magnetic stirring bar 110 is determined to be absent indicating a loss or a mechanically stuck of the magnetic stirring bar 110.

For example, as the measuring signal induced by the movement of the magnetic stirring bar 110 may be proportional to the flow rate of the fluid, the flow rate of the fluid flowing into the measuring cell 10 via the inlet 180 may be determined directly based on the detected measuring signal.

Additionally, the control module 160 may be configured to generate a warning signal, for example a diagnostic message, when the flow of the fluid or the flow rate of the fluid below a predefined limit.

The measuring signal induced by the rotating magnetic stirring bar 110 may be in the mV range. The control module 160 may further comprise an amplifier, which may be configured to amplify a low amplitude signal, and/or a microprocessor for direct processing the measuring signal. The low amplitude signal may be processed in a hardware in various ways, for example, passed into a trigger, for example a Schmitt trigger, which may be configured to produce a digital output, if the signal produced may exceed a set point.

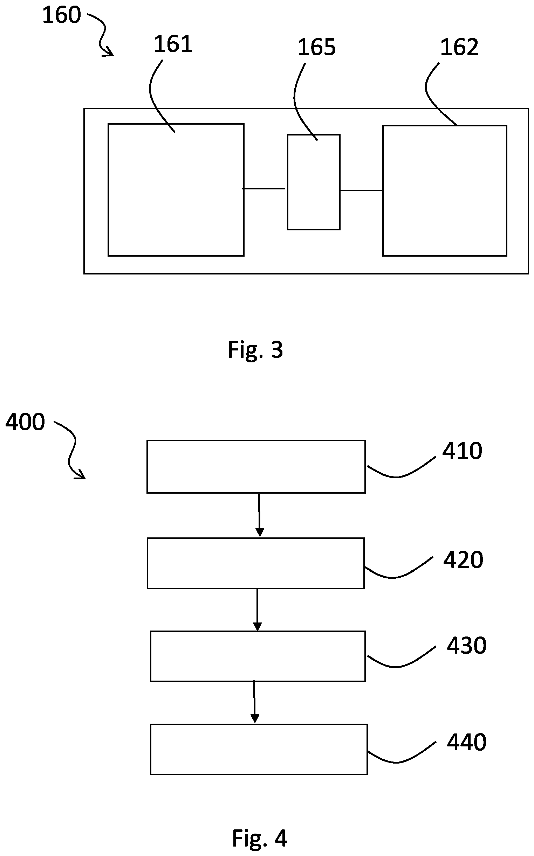

Fig. 4 shows a flow chart illustrating an embodiment of a method 400 for operating as flow measurement system 100 for a chemical analysis system.

In step 410, a magnetic stirring bar 110 is arranged in a measuring cell 10.

In step 420, a fluid is allowed to flow into the measuring cell 10 via an inlet 180, and the magnetic stirring bar 110 is driven into a movement at a flow rate. The movement of the magnetic stirring bar 110 may be a second motion of rotation driving by the fluid flowing into the measuring cell 10 from the inlet 180.

In step 430, a measuring signal induced at the at least one inductor 125 by the movement of the magnetic stirring bar 110 may be detected by switching on or activating a detecting mode 162 of a control module 160 and/or switching off or deactivating a driving mode 161 of the control module 160.

Optionally, the control unit 160 may be switched, by means of a switch element 165, from the driving mode 161 to the detecting mode 162 for detecting the measuring signal by deactivating the driving mode 161 before activating the detecting mode 162 of the control module 160.

Finally, in step 440, a presence of a flow of the fluid and/or the flow rate of the fluid may be determined, based on the detected measuring signal, which may be proportional to the flow rate of the fluid. Additionally, a presence of the magnetic stirring bar 110 may also be determined, based on the detected measuring signal.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SIGNS

- 10: measuring cell
- 100: flow measurement system
- 110: magnetic stirring bar
- 120: inductor arrangement
- 125: at least one inductor
- 160: control module
- 161: driving circuitry
- 162: detecting circuitry
- 165: switch element
- 180: inlet
- 400: method for operating an electromagnetic stirring and measuring system
- 410: step of arranging a magnetic stirring bar in a measuring cell
- 420: step of allowing a fluid flowing into the measuring cell via an inlet and driving the magnetic stirring bar into a movement
- 430: step of detecting a measuring signal induced at the at least one inductor
- 440: step of determining a presence of a flow fo the fluid and/or the flow rate of the fluid

## Claims

1. Flow measurement system (100) for a chemical analysis system, comprising:
a measuring cell (10) comprising an inlet (180), configured for allowing a fluid flowing into the measuring cell (10) at a flow rate,
a magnetic stirring bar (110), arrangeable in the measuring cell (10) and configured to be driven into a movement by the fluid flowing into the measuring cell (10), and
an inductor arrangement (120) comprising at least one inductor (125);
wherein the at least one inductor (125) of the inductor arrangement (120) is configured to detect a measuring signal induced at the at least one inductor (125) by the movement of the magnetic stirring bar (110) and indicative of a presence of the flow of the fluid and/or the flow rate of the fluid.

2. The flow measurement system (100) according to claim 1,
wherein the measuring signal is a voltage signal induced by the movement of the magnetic stirring bar (110) at the at least one inductor (125).

3. The flow measurement system (100) according to claim 1 or 2,
wherein the measuring signal induced by the movement of the magnetic stirring bar (110) is proportional to the flow rate of the fluid.

4. The flow measurement system (100) according to one of the preceding claims,
wherein the at least one inductor (125) comprises a plurality of inductors, which are arranged axially around the axis of rotation of the magnetic stirring bar (110).

5. The flow measurement system (100) according to one of the preceding claims,
wherein the at least one inductor (125) is configured to generate a magnetic field for inducing a first motion of rotation of the magnetic stirring bar (110) having an inertia of rotation, in order to agitate the fluid in the measuring cell (10).

6. The flow measurement system (100) according to claim 5 or 6,
wherein the plurality of inductors (125) are configured to be energized in a predefined order and/or at a predefined frequency for generating the magnetic field for inducing the first motion of rotation of the magnetic stirring bar (110).

7. The flow measurement system (100) according to one of the preceding claims, further comprising:
a control module (160), configured to activate a driving mode (161) or a detecting mode (162) for the at least one inductor (125) of the inductor arrangement (120);
wherein the driving mode (161) is configured to activate the at least one inductor (125) to generate the magnetic field for inducing the first motion of rotation of the magnetic stirring bar (110);
wherein the detecting mode (162) is configured to activate the at least one inductor (125) to detect the measuring signal for determining the movement of the magnetic stirring bar (110) as a result of the presence of the flow of the fluid and/or the flow rate of the fluid.

8. The flow measurement system (100) according to one of the preceding claims,
wherein the movement of the magnetic stirring bar (110) is a second motion of rotation driven by the fluid flowing into the measuring cell (10) from the inlet (180).

9. The flow measurement system (100) according to 7 or 8,
wherein the control module (160) is configured to switch off the driving mode (161) for enabling the measuring signal to be detected.

10. The flow measurement system (100) according to one of the preceding claims 7 to 9,
wherein the control module (160) further comprises a switch element (165), configured to switch between the driving mode (161) and the detecting mode (162).

11. Chemical analysis system for determining a flow rate of a fluid in a measuring cell (10), comprising:
a flow measurement system (100) according to one of the preceding claims 1 to 10, configured to measure a flow rate of a magnetic stirring bar (110) for agitating a fluid in the measuring cell (10), and
a detecting arrangement, configured to detect the fluid in the measuring cell.

12. The chemical analysis system according to claim 11,
wherein the detecting arrangement is arrangeable in a top region of the measuring cell (10) or laterally to the measuring cell (10).

13. Use of a flow measurement system (100) according to one of the claims 1 to 10 in a chemical analysis system according to claim 11 or 12.

14. Method (400) for operating a flow measurement system (100) for a chemical analysis system, comprising the steps of:
arranging (410) a magnetic stirring bar (110) in a measuring cell (10);
allowing (420) a fluid flowing into the measuring cell (10) via an inlet (180) and driving the magnetic stirring bar (110) into a movement at a flow rate;
detecting (430) a measuring signal induced at the at least one inductor (125) by the movement of the magnetic stirring bar (110) by switching on a detecting mode (162) of a control module (160) and/or switching off a driving mode (161) of the control module (160);
determining (440), based on the detected measuring signal, a presence of a flow of the fluid and/or the flow rate of the fluid.

15. The method according to claim 14, further comprising the step of:
adjusting a volume of the fluid allowed to flow through or into the measuring cell (10) based on the flow rate determined by the flow measurement system (100).
